# EUROPÄISCHE PATENTSCHRIFT

(11) **EP 4 054 796 B1**
(45) Veröffentlichungstag und Bekanntmachung des Hinweises auf die Patenterteilung: **29.11.2023**
(21) Anmeldenummer: 20786270.7
(22) Anmeldetag: 01.10.2020
(51) Int. Cl.: B23Q 17/09

(54) **WERKZEUGHALTER MIT MINDESTENS EINEM SENSOR**
TOOL HOLDER HAVING AT LEAST ONE SENSOR
PORTE-OUTIL AYANT AU MOINS UN CAPTEUR

(30) Priorität: 08.11.2019 DE 102019130162
(43) Veröffentlichungstag der Anmeldung: 14.09.2022
(73) Patentinhaber: WTO Vermögensverwaltung GmbH, 77797 Ohlsbach (DE)
(72) Erfinder: KIRN, Matthias, 77770 Durbach (DE); TSCHIGGFREI, Sascha, 77797 Ohlsbach (DE); MAUCH, Hanjo, 77933 Lahr-Sulz (DE); JANSEN, Karlheinz, 77746 Schutterwald (DE)
(74) Vertreter: DREISS Patentanwälte PartG mbB
(86) Internationale Anmeldenummer: PCT/EP2020/077518
(87) Internationale Veröffentlichungsnummer: WO 2021/089252

(56) Entgegenhaltungen:
- EP-A2- 0 337 669
- WO-A1-2005/063437
- DE-A1-102015 005 718
- DE-U1- 29 923 695
- US-B1- 6 370 789

## Beschreibung

Werkzeughalter werden in den verschiedensten Werkzeugmaschinen, wie zum Beispiel Drehmaschinen, Fräsmaschinen und Bearbeitungszentren, eingesetzt. Sie sind das Bindeglied zwischen dem eigentlichen Schneidwerkzeug (Wendeschneidplatte, Bohrer, Fräser etc.) und der Werkzeugmaschine. Werkzeughalter können auch in der Art eines modularen Baukastens aus verschiedenen Modulen zusammengesetzt werden. Dann wird eines der Module oftmals als "Werkzeugadapter", "Bohrstange" oder "Verlängerung" bezeichnet und ein anderes Modul als "Werkzeughalter".

Diese Unterschiede in der Benennung sind mit Blick auf die beanspruchte Erfindung jedoch unwesentlich; von Bedeutung ist deren Funktion als Bindeglied zwischen Werkzeugmaschine und Schneidwerkzeug.

Es gibt angetriebene und (fest-)stehende Werkzeughalter. Angetriebene Werkzeughalter besitzen zumindest eine Verstellachse oder/und eine Spindel, welche das Werkzeug (Bohrer, Fräser, Gewindebohrer, Wirbelring, Hobel, ...) in die zur Bearbeitung des Werkstücks erforderliche (Dreh-, Hub- und/oder Schwing-) Bewegung versetzt. Der Antrieb selber kann in den Werkzeughalter integriert sein; zum Beispiel in Form eines Elektromotors, einer Turbine oder eines Piezoelelements. Der Antrieb kann auch außerhalb des Werkzeughalters angeordnet sein. Viele Werkzeugmaschinen stellen einen externen Antrieb für den Werkzeughalter bereit. Beispielhaft seien hier die Spindel einer Werkzeugmaschine oder der Antrieb innerhalb eines Revolvers genannt. Bei Letzteren werden der externe Antrieb und die Spindel oder die Antriebswelle des Werkzeughalters über eine lösbare Kupplung verbunden.

Stehende Werkzeughalter sind Werkzeughalter ohne eine Verstellachse und ohne eine Spindel. Das feststehende Werkzeug, wie zum Beispiel eine Bohrstange, wird an dem Werkzeughalter befestigt.

Um die Produktivität und Qualität eines Bearbeitungsprozesses zu erhöhen, ist es bekannt, Werkzeughalter mit Sensoren auszustatten. Werkzeughalter mit Sensoren sind aus der DE 10 2014 116 861 A1 und der WO 2018/099697 A1 bekannt. Die Sensoren dienen dazu, Betriebs- oder Zustandsdaten zu erfassen. Betriebsdaten können z.B. die Drehzahl der Spindel, Temperatur(en), Schwingungswerte und der Druck des Kühlmittels sein. Der Zustand des Werkzeughalters kann zum Beispiel dadurch erfasst werden, dass eine Leckage des Kühlmittels und/oder Vibrationen ermittelt werden. Die Abgrenzung zwischen Betriebsdaten und Daten, welche den Zustand des Werkzeughalters erfassen, ist nicht immer eindeutig. So können Vibrationen auf ein stumpfes Werkzeug, eine defekte Spindellagerung oder ein defektes Übertragungselement (z. B. ein defektes Zahnrad) hindeuten.

Die von dem oder den Sensoren erfassten (Roh-)Daten werden (optional) zuerst aufbereitet und dann bevorzugt drahtlos an einen externen Empfänger übertragen. Zur Erfassung und Übertragung der Daten wird elektrische Energie benötigt, die üblicherweise von einer Batterie bereitgestellt wird. Der für die Batterie zur Verfügung stehende Bauraum im oder am Werkzeughalter und damit auch deren Kapazität sind begrenzt.

Um den Stromverbrauch zu verringern, ist aus der DE 10 2014 116 861 A1 eine Stand-by-Schaltung bekannt. Das Umschalten zwischen Betriebs- und Standby-Zustand kann unter Berücksichtigung der Sensorsignale wie z.B. der Drehzahl oder Schwingungssignalen erfolgen. Mit Hilfe der Stand-by-Schaltung wird der Stromverbrauch in den Zeiten, in denen keine Daten erfasst werden, verringert. Für die Erkennung der Änderung des Betriebszustandes muss jedoch die Elektronik auch während des Standby-Betriebs mit Energie versorgt werden und belastet somit die Batterie.

Werkzeughalter für Werkzeugmaschinen sind in der Regel nicht ständig im Einsatz. Wenn ein Werkzeughalter nicht benötigt wird, dann wird er außerhalb der Maschine in einem Magazin oftmals für mehrere Tage oder sogar Wochen gelagert. Danach ist die Batterie sehr häufig ganz oder zumindest weitgehend entladen und muss ersetzt werden. Das führt in der Praxis immer wieder zu Problemen und einer reduzierten Produktivität.

Aus dem Stand der Technik sind verschiedene Ansätze zur Realisierung einer Stromsparschaltung in einem Werkzeughalter bekannt.

Die DE 299 23 695 U1 beschreibt einen angetriebenen Werkzeughalter, bei dem einer Stromsparschaltung mit einem Reed-Schalter vom Typ "normally open" und einem mittelbar an der Spindel angeordneten Magneten. Sobald die Spindel angetrieben wird, bewegt sich der Magnet in die Nähe des Reed-Schalters und schließt ihn.

Aus der WO 2005/063437 A1 ist ein Werkzeughalter mit mehreren Schaltern bekannt, die drahtlos und separat betätigbar sind.

Aus der EP 0 337 669 A2 und der US 6, 370, 789 B1 sind weitere Werkzeughalter mit Schaltern bekannt.

Der Erfindung liegt die Aufgabe zugrunde, einen Werkzeughalter anzugeben, welcher die Nachteile des Standes der Technik überwindet. Insbesondere soll der Werkzeughalter robust und zuverlässig sein.

Diese Aufgabe wird mit einem Werkzeughalter nach Anspruch 1 oder 3 gelöst.

Durch die erfindungsgemäße berührungslose Betätigung des Schalters durch die Wand des Gehäuses oder eine Abdeckung, ist es möglich, das Gehäuseinnere zuverlässig gegen das Kühlschmiermittel und die Späne, die beim Bearbeiten eines Werkstücks zwangläufig anfallen, zu schützen. Eine Schwächung der Struktur des Gehäuses findet ebenfalls nicht statt, so dass die mechanische Stabilität und Steifigkeit des Werkzeughalters unverändert hoch sind.

Durch das Ausschalten bzw. Trennen der Stromversorgung von dem Datenmodul ist sichergestellt, dass in geöffnetem Zustand der Schalteinheit, wenn der Werkzeughalter nicht benutzt wird, kein Strom mehr fließt und sich der Energie- oder Ladungsspeicher der Stromversorgung nicht entlädt. Der Energiespeicher bzw. Speicher elektrischer Ladung (Ladungsspeicher) der Stromversorgung kann eine nichtaufladbare Batterie oder ein aufladbarer Akkumulator oder/und ein anderer aufladbarer Ladungsspeicher sein. Die Erfindung kann zusammen mit Batterien und Akkumulatoren oder allen anderen Bauarten aufladbarer Ladungsspeicher (wie z. B. Lithium-Ionen-Akkumulatoren, SuperCap-Kondensatoren, Nickel-Cadmium-Akkumulatoren, BleiAkkumulatoren) eingesetzt werden.

Aus Gründen der sprachlichen Vereinfachung werden die verschiedenen Ladungsspeicher unter dem Oberbegriff "Akkumulator" subsumiert.

Durch das erfindungsgemäße Ausschalten bzw. Trennen der Stromversorgung von dem Datenmodul ist es möglich, den Werkzeughalter auch über Wochen oder sogar Monate zu lagern, ohne dass der Energie- bzw. Ladungsspeicher der Stromversorgung entladen wird. Anders ausgedrückt: Unmittelbar nach der Entnahme des erfindungsgemäßen Werkzeughalters aus einem Lagerplatz oder Magazin ist dieser einsatzbereit. Außerdem wird die Lebensdauer einer Batterie signifikant erhöht und das Ersetzen einer entladenen Batterie durch eine neue Batterie ist deutlich seltener erforderlich. Mit dem Begriff "Lebensdauer" ist die Zeitspanne zwischen dem Einsetzen einer neuen Batterie bis zu deren Auswechslung, weil sie entladen ist, gemeint. Eine verlängerte Lebensdauer erhöht die Verfügbarkeit und senkt die Betriebskosten des Werkzeughalters signifikant. Außerdem ist ein zuverlässiger Betrieb der Sensoren während der Bearbeitung eines Werkstücks sichergestellt.

"Berührungslos" bedeutet im Zusammenhang mit der Erfindung, dass der Schalter im Inneren des Gehäuses angeordnet sein kann und keine Öffnung im Gehäuse benötigt wird. Das ist besonders deshalb vorn Vorteil, weil Werkzeughalter im Arbeitsraum einer Werkzeugmaschine eingesetzt werden und sie den dort herrschenden rauen Bedingungen ausgesetzt sind. Die Bedingungen im Arbeitsraum sind geprägt durch ständige Beaufschlagung mit Kühlschmierstoffen (Schneidölen, Kühlschmierstoff-Emulsionen), Vibrationen, Temperaturschwankungen und natürlich den bei der Bearbeitung entstehenden Spänen.

An einen konventionellen mechanischen Schalter, der von Hand betätigt wird, werden daher sehr hohe Anforderungen bezüglich Abdichtung, mechanischer Stabilität und Temperaturbeständigkeit gestellt. Das führt somit zu einem hohen Raumbedarf und hohen Kosten. Auch "elastische Abdeckungen" in der Art einer (metallischen) Membran, über die man einen mechanischen Schalter betätigen kann, ohne die Außenwand eines Gehäuses zu öffnen, führen ebenfalls zu mechanisch aufwändigen und nicht ausreichend robusten Konstruktionen.

Die erfindungsgemäße Lösung ist sehr einfach im Aufbau. In einer besonders einfachen Form ist die Schalteinheit als Reed-Schalter ausgebildet. Ein Reed-Schalter ist ein Schalter, der mittels eines außen angelegten Magnetfeldes betätigt wird. Solche Reed-Schalter sind seit Jahrzehnten vielfach bewährt. Sie sind sehr kostengünstig in verschiedensten Ausführungen und für verschiedenste Schaltströme verfügbar und erlauben eine sehr hohe Zahl von Schaltungen.

Gemäß einer vorteilhaften Ausgestaltung der Erfindung ist der Reed-Schalter als Öffner (normally closed (NC)) ausgebildet. In dieser Ausgestaltung öffnet der Reed-Schalter, wenn ein Permanentmagnet in seine Nähe gebracht wird. Das ist anders als bei üblichen Reed-Schaltern. Übliche Reed-Schalter schließen, sobald ein geeigneter Permanentmagnet in ihre Nähe gebracht wird.

Gemäß einer weiteren vorteilhaften Ausgestaltung der Erfindung ist der Reed-Schalter als Wechsler (single pole double throw (SPDT)) ausgebildet. In dieser Ausgestaltung wird durch ein außen angelegtes Magnetfeld die Schaltstellung des Reed-Schalters (offen oder geschlossen) einmal geändert.

In weiterer Ausgestaltung der Erfindung ist es auch möglich, die Schalteinheit als drahtlos bzw. durch elektromagnetische Wellen oder Felder betätigten Schalter auszuführen. Hierzu gibt es eine Vielzahl möglicher Schaltungsvarianten, die dem einschlägigen Fachmann bekannt sind.

In einer weiteren Ausgestaltung der Erfindung umfasst die Schalteinheit einen elektrisch betätigbaren Schalter, wobei die Schalteinheit zum Schalten des elektrisch betätigbaren Schalters durch einen außerhalb des Werkzeughalters befindlichen Sender drahtlos mit elektrischer Energie versorgt wird. In diesem Fall wird elektrische Energie mittels elektromagnetischer Wellen berührungslos von dem Sender auf die Schalteinheit übertragen. Vorteilhafterweise bezieht die Schalteinheit die gesamte zum Betätigen des Schalters benötigte Energie über den Sender, sodass zum Betätigen des Schalters keine zusätzliche Stromversorgung wie eine Batterie benötigt wird. Die elektrische Energieversorgung erfolgt beispielsweise mittels RFID-Technologie (RFID = engl. radio frequency identification). Der Sender erzeugt dabei magnetische Wechselfelder oder sendet hochfrequente Radiowellen aus. Ein auf der RFID-Technologie basierender bekannter Übertragungsstandard ist beispielsweise unter der Bezeichnung NFC (engl. near field communication; deutsch Nahfeldkommunikation) bekannt.

Die RFID-Technologie ist ein Beispiel für das sogenannte Energy Harvesting. Darunter versteht man die Gewinnung kleiner Mengen elektrischer Energie zur Versorgung von mobilen Geräten oder Sensoren. Die für das Energy Harvesting eingesetzten Strukturen werden auch als "Nanogenerator" bezeichnet. Der erfindungsgemäße Werkzeughalter kann auch mit einem oder mehreren Nanogeneratoren oder Generatoren ausgerüstet sein. Sie dienen dazu, die von dem Datenmodul und/oder den Sensoren benötigte elektrische Energie zu erzeugen. Die von dem (Nano-) Generator erzeugte Energie kann auch in einem wiederaufladbaren Energie- oder Ladungsspeicher (Akkumulator) zwischengespeichert werden.

Vorteilhafterweise ist der elektrisch betätigbare Schalter derart ausgebildet, dass der Schalter in seiner gewählten Position verbleibt, wenn die Energiezufuhr von dem Sender unterbrochen wird.

In einer weiteren Ausgestaltung der Erfindung umfasst die Schalteinheit einen Empfänger zum Empfangen der von dem Sender, insbesondere mittels elektromagnetischen Wellen, ausgesandten elektrischen Energie.

Der Sender ist außerhalb des Werkzeughalters angeordnet, während ein Empfänger Teil der Schalteinheit ist und die Signale des Senders empfängt und entsprechend den Signalen die elektrische Verbindung zwischen Stromversorgung und Datenmodul herstellt bzw. trennt.

In erfindungsgemäßer Ausgestaltung umfasst das Datenmodul einen Drehzahl- oder Drehwinkelsensor, mindestens einen Temperatursensor, einen Beschleunigungssensor, ein Mikrofon und/oder einen Sensor zur Erfassung des Ladezustands der Stromversorgung bzw. von deren Ladungsspeicher.

Mit Hilfe der Temperatursensoren kann beispielsweise die Temperatur in der Nähe des Werkzeugs erfasst werden. Daraus können Rückschlüsse auf die Belastung des Werkzeugs und dessen Verschleiß gezogen werden. Die Beschleunigungssensoren bzw. der Beschleunigungssensor dient dazu, evtl. auftretende Vibrationen (Rattern) des Werkzeugs zu erfassen. Außerdem können bei angetriebenen Werkzeughaltern Defekte, beispielsweise in der Lagerung der Spindel oder der mechanischen Übertragungselemente, wie z.B. Getriebebauteile, erkannt werden. In ähnlicher Weise ist es auch möglich, mithilfe von Mikrofonen, welche die Geräuschentwicklung im Inneren des Gehäuses erfassen, über entsprechende Auswertungen Rückschlüsse auf die Lagerung oder der mechanischen Übertragungselemente und den Betriebszustand bzw. den Zustand des Werkzeugs zu ziehen.

Über die Erfassung des Ladezustands der Stromversorgung ist es möglich, den Ausfall des Datenmoduls bzw. der Sensorik während der Bearbeitung eines Werkstücks oder einer Serie von Werkstücken wirkungsvoll zu verhindern. Wenn nämlich eine nicht ausreichend geladene Stromversorgung detektiert wird, kann dies über eine entsprechende Anzeige dem Maschinenbediener zur Kenntnis gebracht werden. Er kann dann entweder die Stromversorgung (Batterie) auswechseln, den Akkumulator und/oder Ladungsspeicher laden oder einen betriebsbereiten und mit ausreichend geladener Stromversorgung versehenen Austausch-Werkzeughalter anstelle des Werkzeughalters mit entladener Stromversorgung einsetzen.

Das Datenmodul umfasst in bevorzugter Ausgestaltung der Erfindung eine Auswerteeinheit zur Auswertung und/oder Aufbereitung der von dem mindestens einen Sensor erfassten Daten. Dann ist die Datenmenge, welche von dem Datenmodul an eine übergeordnete Steuerung oder dergleichen übertragen werden muss, minimal. Das macht die Datenübertragung einfacher und zuverlässiger. Es ist jedoch auch möglich, die Rohdaten von den Sensoren unbearbeitet an eine übergeordnete Steuerung oder Auswerteeinheit außerhalb des Werkzeughalters zu übertragen und dort aufzubereiten.

Wenn die Daten innerhalb des Werkzeughalters aufbereitet werden, dann sinkt letztendlich der Energieverbrauch für das Datenmodul und das Übertragen der Daten an eine übergeordnete Steuerung. Das bedeutet, dass bei gleicher Kapazität der Batterie sich deren Lebensdauer verlängert. Im Falle eines Akkumulators oder Ladungsspeichers erhöht sich die Betriebsdauer (das ist die Zeit zwischen zwei Ladungsvorgängen) .

Das Datenmodul und die Stromversorgung sind in dem Gehäuse des Werkzeughalters oder einem separaten Gehäuse, auf jeden Fall aber flüssigkeitsdicht und gegen das Eindringen von Spänen geschützt, untergebracht. Um beispielsweise die Stromversorgung auswechseln zu können, ist an dem Gehäuse des Werkzeughalters oder dem separaten Gehäuse bevorzugt eine Abdeckung angeordnet. Diese Abdeckung kann mithilfe einer Dichtung dicht mit dem Gehäuse bzw. dem separaten Gehäuse verbunden werden. Besonders geeignet sind Schraubverbindungen, da sie sehr leistungsfähig sind und sich ohne Weiteres mehrfach anziehen und lösen lassen.

Das separate Gehäuse und/oder der Deckel sind bevorzugt aus einem nicht-ferromagnetischen Werkstoff, wie z.B. Aluminium, Kunststoff oder Keramik. Dadurch ist die Betätigung der Schalteinheit beispielsweise durch einen Permanentmagnet einfacher. Auch die induktive Ladung eines Akkumulators oder Ladungsspeichers ist durch eine solche nicht-ferromagnetische Gehäusewand einfacher möglich, als wenn die Gehäusewand aus einem ferromagnetischen Material besteht.

Die Stromversorgung besteht bevorzugt aus einem Akkumulator oder/und Ladungsspeicher. In diesem Fall kann innerhalb des Gehäuses bzw. des separaten Gehäuses eine Empfangsspule und ein Gleichrichter vorgesehen sein. Über die Empfangsspule kann Energie von einer außerhalb des Werkzeughalters positionierten Sendespule in das System eingekoppelt werden. Der Gleichrichter, üblicherweise mit einer Ladeelektronik ausgerüstet, wandelt die Wechselspannung der Empfangsspule in eine zum Laden des Akkumulators bzw. des Ladungsspeichers geeignete Gleichspannung um. Auf diese Weise wird der Akkumulator geladen.

Alternativ können der Akkumulator, der Ladungsspeicher, das Datenmodul und/oder der oder die Sensoren von einem in den Werkzeughalter integrierten Nanogenerator oder Generator mit elektrischer Energie versorgt werden. Die Stromversorgung dient dann während des Betriebs als Pufferspeicher. Ihre Kapazität kann dann deutlich kleiner sein, als bei Werkzeughaltern ohne Nanogenerator oder Generator.

Es ist möglich, in Verbindung mit einem Sensor zur Erfassung des Ladezustands des Akkumulators oder/und Ladungsspeichers beim Einlagern des Werkzeughalters in einem Magazin zu entscheiden, ob der Akkumulator oder/und Ladungsspeicher vorsorglich geladen werden soll. Alternativ ist es auch möglich, den Akkumulator oder/und Ladungsspeicher des Werkzeughalters bei der Entnahme aus dem Magazin zu laden, bevor er in einer Werkzeugmaschine zum Einsatz kommt, so dass die volle Kapazität des Akkumulators oder/und des Ladungsspeichers während der Bearbeitung des Werkstücks oder einer Serie von Werkstücken zur Verfügung steht.

In einer ersten Ausführungsvariante wird der Schalter durch einen Magneten betätigt, der sich außerhalb des Gehäuses und damit hinter der "Trennwand" befindet und mit einem Reed-Schalter zusammenwirkt.

Wird ein Magnet zur Betätigung der Schalteinheit (Reed-Kontakt) eingesetzt, sieht die Erfindung weiterhin vor, dass der Magnet während des stromlosen Zustandes am Werkzeughalter und damit außerhalb des Gehäuses verbleibt. Durch seine Magnetwirkung öffnet er den sich innerhalb des Gehäuses befindlichen Schalter und unterbricht die elektrische Verbindung zwischen Stromversorgung und Datenmodul.

Dadurch, dass eine Vielzahl der Werkzeughalter ein Gehäuse aus Stahl haben, kann der Magnet problemlos an diesem Gehäuse und in der Nähe des Reed-Schalters positioniert und gehalten werden. Wenn dies unerwünscht ist, z.B. um eine Magnetisierung des Gehäuses zu verhindern, kann man zumindest einen Teil des Gehäuses (z.B. einen Deckel) aus einem nicht ferromagnetischen Werkstoff (z.B. Aluminium, NE-Legierungen, Kunststoff oder Keramik) herstellen. Die Schaltwirkung des Magneten in Verbindung mit dem Reed-Schalter wird dadurch vereinfacht.

Die Haltefunktion kann dennoch sichergestellt werden, wenn sich hinter diesem Teil des Gehäuses eine metallische Einlage befindet, die ausreichend groß dimensioniert ist um den Magnet zu halten.

Alternativ kann auch ein aus ferromagnetischem Material (z.B. Stahl) bestehendes Gehäuse der Stromversorgung (Batterie oder Akkumulator) für die Befestigung des Magneten verwendet werden.

Durch diesen Aufbau ist man in der Auswahl des Werkstoffes für den nicht ferromagnetischen Teil des Gehäuses frei und kann optimale Rahmenbedingungen schaffen. Durch die freie Wahl des Werkstoffs kann man z.B. die Abschirmwirkung eines metallischen Gehäuses auf eine Funkverbindung zumindest durch eine partielle nicht-metallische Abdeckung deutlich reduzieren.

Gleichzeitig kann man für diesen Teil des Gehäuses auch einen Werkstoff mit einem hohen Verschleiß-Widerstand gegen die abrasiven Umgebungsbedingungen im Arbeitsraum der Werkzeugmaschine, wie z.B. Keramik, wählen.

In einer zweiten Ausführungsvariante kann das Datenmodul oder eine davon unabhängige zweite elektronische Schalteinheit über elektromagnetische Wellen oder hochfrequente Radiowellen (z.B. RFID oder NFC und beispielsweise mit einem Mobiltelefon als Sender) zeitweise mit Energie versorgt werden und als elektrisch betätigter Schalter zwischen Datenmodul und Stromversorgung (Batterie, Akkumulator, Ladungsspeicher etc.) geschaltet werden. In dieser Ausführung ist die Elektronik so aufgebaut, dass der Schalter in seiner gewählten Position verbleibt, wenn die Energiezufuhr aus der Übertragung nach dem Schaltvorgang unterbrochen wird.

Weitere Vorteile und vorteilhafte Ausgestaltungen der Erfindung sind den nachfolgenden Zeichnungen und deren Beschreibung entnehmbar.

### Zeichnung:

Es zeigen:
- Figur 1:: einen erfindungsgemäßen angetriebenen Werkzeughalter stark vereinfacht und im Längsschnitt;
- Figur 2:: den Werkzeughalter gemäß Figur 1 in einer Werkzeugmaschine;
- Figur 3:: den Werkzeughalter gemäß Figur 1 in einem Magazin;
- Figuren 4 und 5:: ein Ausführungsbeispiel einer erfindungsgemäßen Unterbrechung der Stromversorgung in zwei Schaltzuständen;
- Figuren 6 bis 8:: weitere Ausführungsbeispiele einer erfindungsgemäßen Unterbrechung der Stromversorgung und
- Figur 9:: weitere Ausführungsbeispiele erfindungsgemäßer Werkzeughalter (Mit Akkumulator oder/und Ladungsspeicher und induktiver Ladung).

### Beschreibung der Ausführungsbeispiele

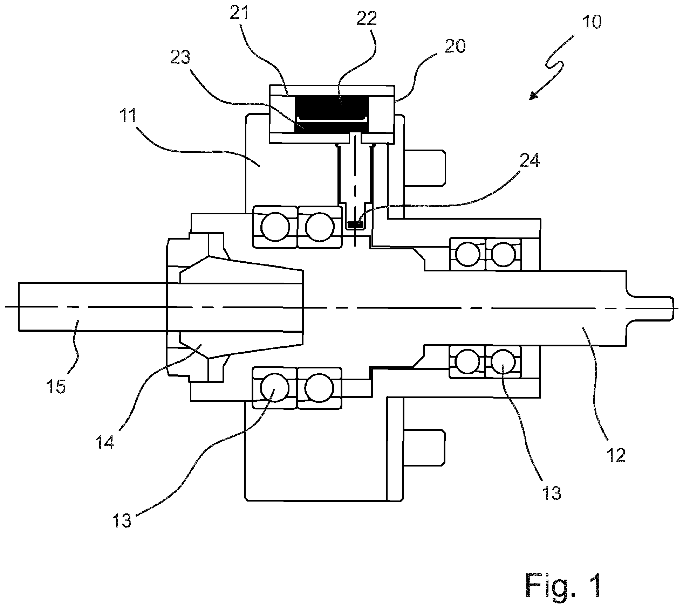

**Figur 1** zeigt einen erfindungsgemäßen angetriebenen Werkzeughalter 10. Er umfasst ein Gehäuse 11 und eine Spindel 12. Die Spindel 12 ist über Lager 13 drehbar im Gehäuse 11 aufgenommen. An dem in der Figur linken Ende der Spindel 12 ist eine Aufnahme 14 für ein Werkzeug 15, z.B. ein Fräser oder Bohrer, vorhanden. Das in Figur 1 rechte Ende des Werkzeughalters 10 ist so ausgestaltet, dass es mit einer Aufnahme (z. B. einem Revolver) einer Werkzeugmaschine kompatibel ist. Am rechten Ende der Spindel 12 ist ein Zweiflach ausgebildet. Er dient dazu, die Spindel 12 mit einer nicht dargestellten Antriebswelle der Werkzeugmaschine drehfest zu verbinden. Soweit ist alles dem einschlägigen Fachmann wohlbekannt.

An dem Gehäuse 11 des Werkzeughalters ist bei diesem Ausführungsbeispiel ein separates Gehäuse 20 befestigt. Es nimmt ein Datenmodul 23 und eine Stromversorgung 22, d. h. eine Batterie, einen Akkumulator oder einen anderen Ladungsspeicher, auf. Alternativ können das Datenmodul 23 und die Stromversorgung 22 auch im Gehäuse 11 des Werkzeughalters 10 untergebracht sein. An dem separaten Gehäuse 20 ist bei diesem Ausführungsbeispiel eine Abdeckung 21 vorhanden. Die Abdeckung ist lösbar, zum Beispiel durch Schrauben, und flüssigkeitsdicht mit dem separaten Gehäuse 20 verbunden. Die Schrauben und eine optionale Dichtung sind nicht dargestellt. Zum Auswechseln der Stromversorgung 22 kann die Abdeckung 21 abgenommen werden.

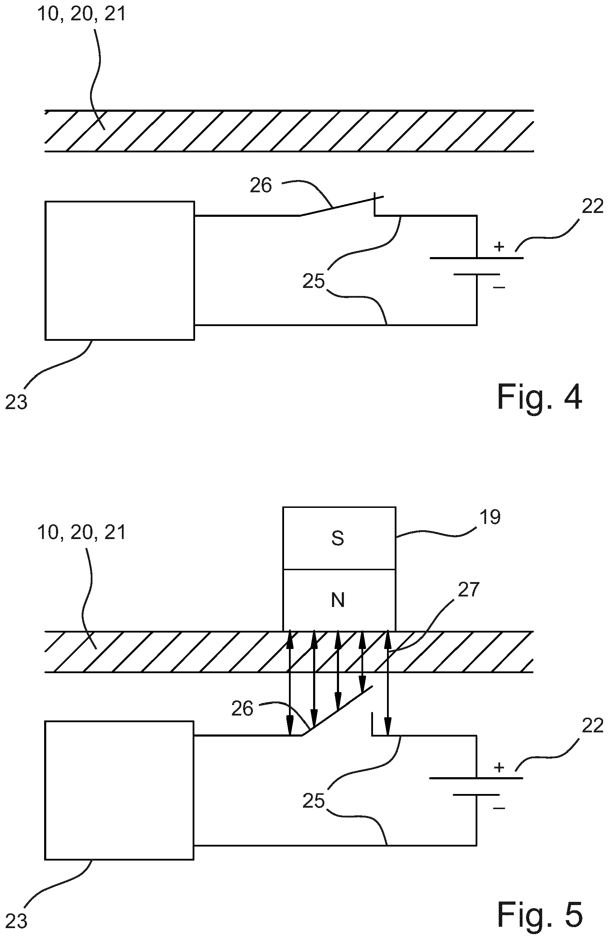

Das Datenmodul 23 und die Stromversorgung 22 sind über Leitungen (nicht dargestellt) elektrisch miteinander verbunden. In der Leitung ist eine erfindungsgemäße berührungslos betätigbare Schalteinheit 26 (siehe Figuren 4 ff) .

Das Datenmodul 23 umfasst mindestens einen Sensor zur Erfassung von Betriebs- und/oder Zustandsdaten. In der Figur 1 ist beispielhaft ein Hallsensor 24 dargestellt, um die Drehzahl der Spindel 12 zu erfassen. Die Erfindung ist nicht auf diesen Hallsensor beschränkt, vielmehr können alle denkbaren Sensoren, die geeignet sind, Betriebsdaten und/oder den Zustand des Werkzeughalters 10 bzw. des Werkzeugs 15 zu erfassen an geeigneter Stelle in oder am Gehäuse 11 des Werkzeughalters 10, der Spindel 12 und/oder dem separaten Gehäuse 20 angebracht werden.

Das Datenmodul 23 kann auch eine Auswerteeinheit umfassen, welche die von dem mindestens einen Sensor zur Erfassung von Betriebs- und/oder Zustandsdaten erfassten Ausgangssignale oder Daten auswertet.

Die Gehäuse 11, 20 und die Gehäuseabdeckung 21 können aus verschiedenen Werkstoffen bestehen. In der Regel besteht das Gehäuse 1 aus Stahl; das separate Gehäuse 20 und die Gehäuseabdeckung 21 können auch aus einem ferromagnetischen Werkstoff oder aus Aluminium, einem mineralischen Material oder einem, bevorzugt faserverstärkten Kunststoff hergestellt werden.

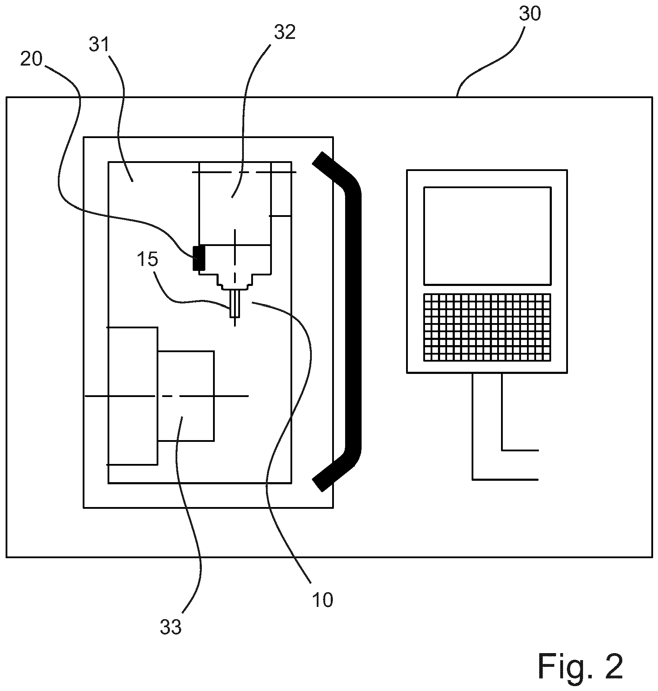

Die **Figur 2** zeigt stark vereinfacht eine Werkzeugmaschine 30. In deren Arbeitsraum 31 befindet sich der erfindungsgemäße Werkzeughalter 10. Er ist in diesem Fall an einer Aufnahme 32 für Werkzeughalter befestigt. Ein Werkstück 33 wird durch das Schneidwerkzeug 15 bearbeitet. Das separate Gehäuse 20 ist in der Figur 2 sichtbar; es nimmt, wie oben beschrieben, das Datenmodul 23 und die Stromversorgung 22 auf. Wenn sich der Werkzeughalter 10 im Arbeitsraum 31 einer Werkzeugmaschine 30 befindet, dann müssen das Datenmodul 23 und die mit ihm verbundenen Sensoren (nicht dargestellt) von der Stromversorgung 22 mit elektrischer Energie versorgt werden. D. h. eine zwischen dem Datenmodul 23 und der Stromversorgung 22 angeordnete erfindungsgemäße Schalteinheit 26 (siehe Figuren 4 und 5) ist geschlossen, so dass das Datenmodul 23 mit der Stromversorgung 22 elektrisch verbunden ist und von ihr mit elektrischer Energie versorgt wird.

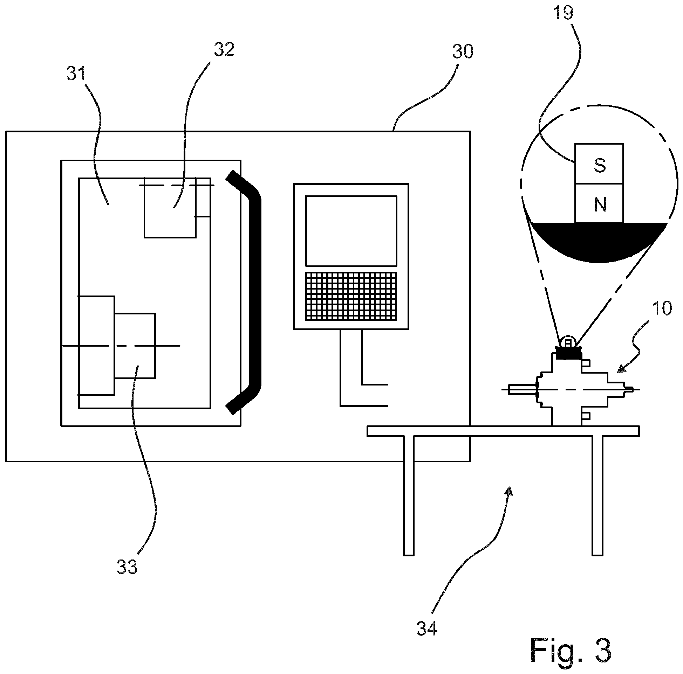

**Figur 3** zeigt die Werkzeugmaschine 30 ohne Werkzeughalter 10. Der Werkzeughalter 10 befindet sich außerhalb der Werkzeugmaschine 30 in einem Lagerplatz 34. Dort soll die elektrische Verbindung zwischen Stromversorgung 22 und dem Datenmodul 23 bzw. den Sensoren unterbrochen sein, um ein Entladen der Stromversorgung 22 zu verhindern.

In den erfindungsgemäßen Werkzeughalter 10 ist eine Schalteinheit 26 integriert, die zum Beispiel als Reed-Schalter ausgebildet sein kann. Ein Reed-Schalter wird betätigt, indem ein Magnetfeld erzeugt wird. Normalerweise schließt der Reed-Schalter, wenn er sich in einem Magnetfeld befindet.

Bei dem erfindungsgemäßen Werkzeughalter ist der Reed-Schalter bevorzugt als Öffner (normally closed (NC)) ausgeführt. d. h. er öffnet, wenn er sich in einem geeignet ausgerichteten Magnetfeld mit ausreichender Feldstärke befindet.

An dem Werkzeughalter 10 ist ein (Permanent-)Magnet 19 befestigt. Lage und Ausrichtung des Magneten 19 relativ zu dem Reed-Schalter sind so gewählt, dass der Reed-Schalter öffnet und die Stromversorgung 22 von dem Datenmodul 23 bzw. den Sensoren elektrisch getrennt ist. Dadurch wird eine Entladung der Stromversorgung 22 wirkungsvoll verhindert. Der Magnet 19 ist bevorzugt in eine gut sichtbare Verkleidung aus Kunststoff oder einem anderen nicht ferromagnetischen Material eingebettet. Das ermöglicht eine sehr einfache und wirkungsvolle visuelle Kontrolle, ob bei allen in dem Lager 34 befindlichen Werkzeughaltern 10 die Stromversorgung unterbrochen wurde. Wenn an einem der Werkzeughalter 10 kein Magnet 19 mit einer zum Beispiel roten Verkleidung vorhanden ist, fällt das sofort auf und der fehlende Magnet 19 kann angebracht werden.

Bei einem automatisierten Lager kann über das Magnetfeld des Magneten 19 das Vorhandensein des Magneten 19 beim Einlagern detektiert werden. Falls der Magnet 19 fehlt, kann ein entsprechendes Signal ausgegeben und/oder das Einlagern verweigert werden.

Anhand der Figuren 4 bis 6 wird die Funktion der erfindungsgemäßen Schalteinheit am Beispiel eines Reed-Schalters 26 erläutert. Wie sich aus der Figur 4 ergibt, ist das Datenmodul 23 über Leitungen 25 mit der Stromversorgung 22, in Form einer Batterie und/oder eines Akkumulators und/oder eines anderen Ladungsspeichers, elektrisch verbunden. In einer der Leitungen 25 ist eine Schalteinheit 26 eingebaut. Das Datenmodul 23, die Leitungen 25, die Stromversorgung 22 und die Schalteinheit 26 befinden sich innerhalb des oder der Gehäuse 11, 20 und der Abdeckung 21 und sind flüssigkeitsdicht gegenüber der Umgebung abgeschottet.

In der **Figur 4** ist die Schalteinheit 26 geschlossen, so dass die Stromversorgung (Batterie und/oder Akkumulator und/oder anderer Ladungsspeicher) und das Datenmodul 23 elektrisch miteinander verbunden sind. Das Datenmodul 23 und die mit ihm verbundenen Sensoren (nicht dargestellt) sind in Betrieb. Das kann auch ein Standby-Betrieb sein. In dieser Schaltstellung befindet sich der Werkzeughalter 10 üblicherweise im Arbeitsraum 31 der Werkzeugmaschine 30 wie in Figur 2 dargestellt.

**Figur 5** zeigt denselben Aufbau wie Figur 4, jedoch befindet sich der Werkzeughalter 10 außerhalb des Arbeitsraums 31 der Werkzeugmaschine 30. Außen an dem Werkzeughalter 10, dem Gehäuse 20 oder/und 11 ist ein Magnet 19 so angeordnet, dass die Feldlinien des von ihm erzeugten Magnetfelds die Schalteinheit 26, hier ein Reed-Schalter, öffnen. Dadurch wird der Stromkreis zwischen Stromversorgung 22 und Datenmodul 23 unterbrochen.

Wenn das Gehäuse 20, 11 aus einem ferromagnetischen Material ist, dann wird der Magnet 19 ist durch die Magnetwirkung (in Figur 5 durch die Doppelpfeile 27 illustriert) am Gehäuse (20 oder/und 11) gehalten.

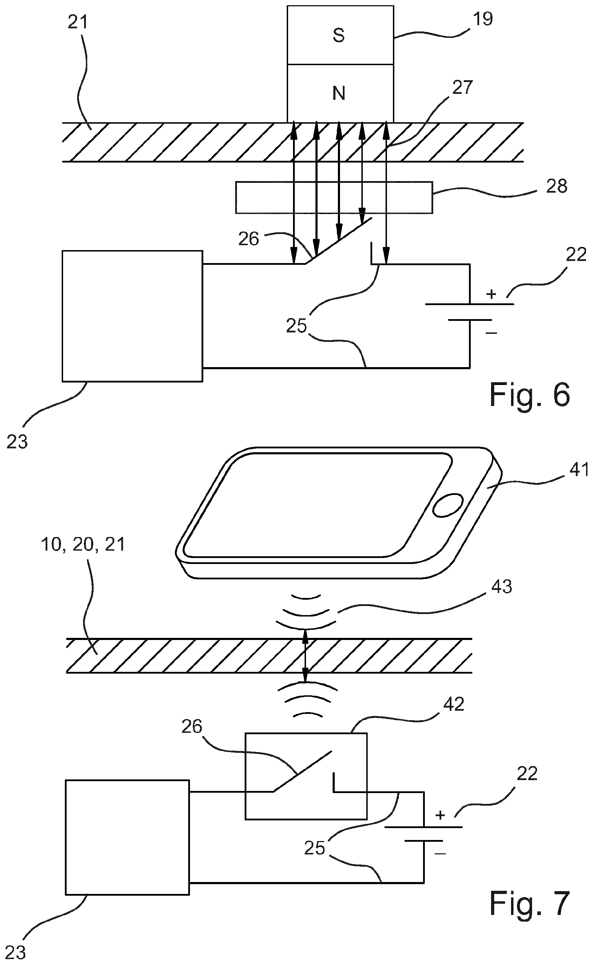

**Figur 6** zeigt einen Aufbau ähnlich wie Figur 5. Hier ist die Abdeckung 21 aus einem nicht-ferromagnetischen Material. Um den Magnet 19 dennoch mittels Magnetkraft an der Abdeckung 21 festhalten zu können, befindet sich innerhalb des Gehäuses 11 ein ferromagnetisches Bauteil 28. Durch die Magnetwirkung 27 zwischen dem Magnet 19 und dem Bauteil 28 wird der Magnet 19 so fest an der Abdeckung 21 gehalten, dass er nicht "von alleine" herunterfällt. Das Bauteil 28 kann ein Teil, z.B. das Gehäuse, der Stromversorgung 22 sein.

Hierzu werden die vier genannten Bauteile 28, 26, 21 und 19 bezüglich ihrer Abmessungen, Formen und geometrischen Anordnung zueinander so abgestimmt, dass der Magnet 19 die Schalteinheit 26 betätigen kann.

In vorteilhafter Ausgestaltung der Erfindung wird das von dem Permanent-Magnet 19 erzeugte Magnetfeld auch dazu genutzt, um den Magnet 19 an dem Werkzeughalter 10, genauer gesagt dem Gehäuse 20, 11 und/oder der Abdeckung 21 zu halten. Der Magnet 19 wird auf diese Weise ohne zusätzlichen konstruktiven Aufwand sicher, ausreichend fest und bei Bedarf manuell lösbar an dem Werkzeughalter 10 fixiert.

Es ist selbstverständlich auch möglich, den Magnet 19 auf andere Weise, zum Beispiel durch eine lösbare Schnappverbindung oder ganz simpel durch ein (auffällig gefärbtes) Gummiband oder ein Band mit einem Klettverschluss am Gehäuse 11, 20 und/oder an der Abdeckung 21 zu befestigen.

**Figur 7** zeigt einen Aufbau ähnlich den Figuren 5 und 6. In dieser Ausführungsform umfasst die Schalteinheit 26 einen elektrisch betätigbaren Schalter, wobei die Schalteinheit 26 zum Schalten des elektrisch betätigbaren Schalters durch einen außerhalb des Werkzeughalters befindlichen Sender 41 drahtlos mit elektrischer Energie versorgt wird. In diesem Fall wird elektrische Energie mittels elektromagnetischer Wellen oder Felder berührungslos von dem Sender 41 auf die Schalteinheit 26 übertragen (Stichwort: Energy Harvesting). Der Sender 41 sendet elektromagnetische Wellen 43, beispielsweise in Form von hochfrequenten Radiowellen, aus. Gemäß der dargestellten Ausführungsform umfasst die Schalteinheit 26 einen Empfänger 42 zum Empfangen der von dem Sender 41, ausgesandten elektromagnetischen Wellen 43.

Diese elektromagnetischen Wellen 43 durchdringen die Wand des Gehäuses 20, 11 und/oder die Abdeckung 21 und erreichen die Schalteinheit 26, die dadurch mit Energie zum Betätigen des Schalters versorgt wird. Dadurch kann der Schalter der Schalteinheit 26 betätigt werden. Vorteilhafterweise ist der elektrisch betätigbare Schalter derart ausgebildet, dass der Schalter in seiner gewählten Position verbleibt, wenn die Energiezufuhr von dem Sender 41 unterbrochen wird.

Der Sender 41 ist zum Beispiel ein elektromagnetische Wellen erzeugendes Gerät, insbesondere ein Mobilfunktelefon, insbesondere ein Smartphone oder ein Tablet.

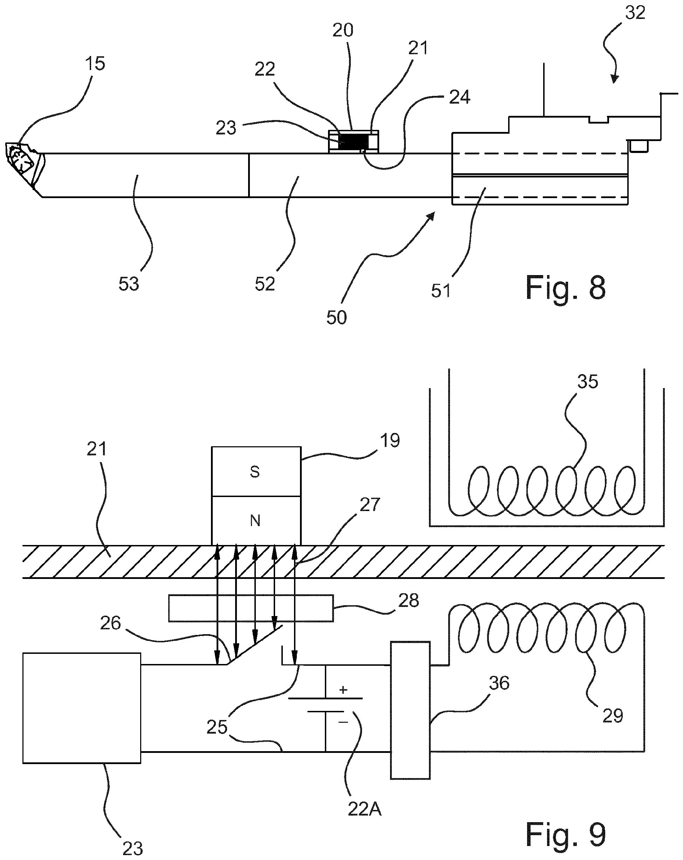

**Figur 8** zeigt einen stehenden und modular aufgebauten erfindungsgemäßen Werkzeughalter 50, der aus mehreren Werkzeughaltermodulen 51, 52 und 53 zusammengesetzt ist. In der Aufnahme des ersten Werkzeughaltermoduls 51 ist ein zweites Werkzeughaltermodul 52 (hier eine Bohrstange) aufgenommen. Am linken Ende der Bohrstange ist ein drittes Werkzeughaltermodul 53 (hier ein Adapter) befestigt, der das Schneidwerkzeug 15 (hier eine Wechselschneidplatte) aufnimmt.

An der Bohrstange 52 ist ein separates Gehäuse 20 befestigt, welches das Datenmodul 23, die Stromversorgung 22 und einen Sensor 24 aufnimmt. In diesem Fall kann der Sensor 24 z.B. ein Beschleunigungssensor sein, um die Schwingungen des Werkzeughalters 50 zu erfassen.

Der oder die Sensoren können - wie dargestellt - in das separate Gehäuse 20 integriert sein. Es ist aber auch möglich, dass einer oder mehrere Sensoren (nicht dargestellt) zum Beispiel in dem dritten Werkzeughaltermodul 53 in unmittelbarer Nähe des Schneidwerkzeugs 15 angeordnet sind. Es kann vorteilhaft sein, dort einen Beschleunigungssensor und/oder einen Temperatursensor vorzusehen.

Mit Hilfe des Beschleunigungssensors kann zum Beispiel ein Rattern des Schneidwerkzeugs 15 und/oder dessen Verschleiß detektiert werden.

Mit Hilfe des Temperatursensors kann die am Schneidwerkzeug 15 herrschende Temperatur erfasst werden. Die BetriebsTemperaturen sind ein Indikator für die Belastung des Schneidwerkzeugs 15; wenn die Temperaturen bei sonst gleichen Bedingungen ansteigen, deutet dies auf den Verschleiß des Schneidwerkzeugs 15 hin.

Die Signalübertragung von dem oder den Sensoren zu dem Datenmodul 23 kann über Signalleitungen im Inneren der Werkzeughaltermodule 53 und 52 erfolgen.

Im Inneren des separaten Gehäuses 20 befindet auch eine aus Gründen der Übersichtlichkeit nicht dargestellte erfindungsgemäße Schalteinheit 26. Mit deren Hilfe kann in der oben beschriebenen Weise die Stromversorgung 22 elektrisch von dem Datenmodul 23 getrennt oder mit ihm verbunden werden.

In der **Figur 9** ist ein weiteres Ausführungsbeispiel dargestellt. Die Stromversorgung 22 ist als aufladbarer Akkumulator und/oder Ladungsspeicher 22A ausgebildet, der induktiv geladen werden kann. Die Figur 9 basiert auf der Figur 6; allerdings kann die induktive Ladung des Akkumulators und/oder Ladungsspeichers 22A auch bei allen anderen Ausführungsformen realisiert werden. Anstelle der induktiven Ladung ist es auch möglich, einen Nanogenerator oder einen Generator (nicht dargestellt) in den Werkzeughalter zu integrieren. Der Nanogenerator oder der Generator erzeugen beim Betrieb des Werkzeughalters elektrische Energie. Mit dieser elektrischen Energie kann das Datenmodul 23 und/oder der Akkumulator und/oder der Ladungsspeicher 22A versorgt bzw. geladen werden.

Der Akkumulator und/oder der Ladungsspeicher 22A ist mittelbar mit einer Empfangsspule 29 verbunden, die sich innerhalb des separaten Gehäuses 20, des Gehäuses 11 bzw. der Abdeckung 21 befindet. Sie ist also genauso gut wie das Datenmodul 23, die Sensoren und der Akkumulator und/oder der Ladungsspeicher 22A gegen Kühlschmiermittel und Späne geschützt.

Da die Empfangsspule 29 Wechselstrom abgibt, der Akkumulator und/oder der Ladungsspeicher 22A jedoch mit Gleichstrom geladen werden muss, ist ein Gleichrichter erforderlich, der nur schematisch als Block 36 in der Figur 9 eingetragen ist.

Der Ladevorgang findet außerhalb der Werkzeugmaschine 30 statt, zum Beispiel an dem Lagerplatz 34. Dort ist eine Sendespule 35 vorgesehen. Die Sendespule 35 und die Empfangsspule 29 sind so zueinander positioniert, dass eine Energieübertragung von der Sendespule 35 auf die Empfangsspule 29 stattfindet, wenn sich der Werkzeughalter in einem entsprechend ausgestatteten Lagerplatz 34 befindet.

Wenn der Lagerplatz 34 mit einer Sendespule 35 versehen ist, dann können alle an einem solchen Lagerplatz eingelagerten Werkzeughalter entweder turnusgemäß oder entsprechend dem Ladezustand des Akkumulators und/oder des Ladungsspeichers 22A aufgeladen werden. Es ist auch möglich, dass der Akkumulator und/oder der Ladungsspeicher 22A vor der Entnahme eines Werkzeughalters aus dem Lagerplatz 34 geladen wird, so dass die volle Kapazität des Akkumulators und/oder des Ladungsspeichers 22A für den anstehenden Bearbeitungsprozess zur Verfügung steht.

### Bezugszeichenliste

- 10: Werkzeughalter
- 11: Gehäuse
- 12: Spindel
- 13: Lager
- 14: Werkzeugaufnahme
- 15: Schneidwerkzeug
- 19: Magnet
- 20: separates Gehäuse
- 21: Gehäuseabdeckung
- 22: Batterie
- 22A: Akkumulator/Ladungsspeicher
- 23: Datenmodul
- 24: Sensor
- 25: Leitung
- 26: Schalter
- 27: Magnetwirkung
- 28: magnetisch wirkendes Bauteil
- 29: Empfangsspule
- 30: Werkzeugmaschine
- 31: Arbeitsraum
- 32: Aufnahme für einen Werkzeughalter
- 33: Werkstück
- 34: Lagerplatz
- 35: Sendespule
- 36: Gleichtrichter
- 41: Sender
- 42: Empfänger
- 43: Wellen, Felder
- 50: Werkzeughalter
- 51: erstes Werkzeughaltermodul
- 52: zweites Werkzeughaltermodul
- 53: drittes Werkzeughaltermodul

## Patentansprüche

1. Werkzeughalter (10, 50) umfassend eine Aufnahme für ein Werkzeug (15) sowie ein Datenmodul (23) und eine Stromversorgung (22), wobei das Datenmodul (23) mindestens einen Sensor (24) zur Erfassung von Betriebs- und/oder Zustandsdaten, und einen Sender zur Übertragung der Daten an einen Empfänger umfasst, wobei der Werkzeughalter (10, 50) eine Schalteinheit (26) aufweist, welche das Datenmodul (23) elektrisch mit der Stromversorgung (22) verbindet oder von ihr trennt, und wobei die Schalteinheit (26) so ausgebildet ist, dass sie berührungslos betätigt wird, wobei die Schalteinheit (26) ein Reed-Schalter ist, **dadurch gekennzeichnet, dass** der Reed-Schalter zur Betätigung durch einen außerhalb des Werkzeughalters (10) befindlichen Magnet (19) ausgebildet ist.

2. Werkzeughalter (10, 50) nach Anspruch 1, **dadurch gekennzeichnet, dass** der Reed-Schalter als Öffner oder als Wechsler ausgebildet ist.

3. Werkzeughalter (10, 50) umfassend eine Aufnahme für ein Werkzeug (15) sowie ein Datenmodul (23) und eine Stromversorgung (22), wobei das Datenmodul (23) mindestens einen Sensor (24) zur Erfassung von Betriebs- und/oder Zustandsdaten, und einen Sender zur Übertragung der Daten an einen Empfänger umfasst, wobei der Werkzeughalter (10, 50) eine Schalteinheit (26) aufweist, welche das Datenmodul (23) elektrisch mit der Stromversorgung (22) verbindet oder von ihr trennt, und wobei die Schalteinheit (26) so ausgebildet ist, dass sie berührungslos betätigt wird, **dadurch gekennzeichnet, dass** die Schalteinheit (26) einen elektrisch betätigbaren Schalter umfasst, und dass die Schalteinheit (26) zum Schalten des elektrisch betätigbaren Schalters durch einen außerhalb des Werkzeughalters (10, 50) befindlichen Sender (41) drahtlos mit elektrischer Energie versorgt wird.

4. Werkzeughalter (10, 50) nach Anspruch 3, **dadurch gekennzeichnet, dass** die Schalteinheit (26) einen Empfänger (42) zum Empfangen der von dem Sender (41), insbesondere mittels elektromagnetischen Wellen, ausgesandten elektrischen Energie umfasst.

5. Werkzeughalter (10, 50) nach einem der vorhergehenden Ansprüche, **dadurch gekennzeichnet, dass** das Datenmodul (23) einen Drehzahl- oder Drehwinkelsensor, mindestens einen Temperatursensor, einen Beschleunigungssensor, ein Mikrofon und/oder einen Sensor zur Erfassung des Lade-Zustands der Stromversorgung (22) enthält.

6. Werkzeughalter (10, 50) nach einem der vorhergehenden Ansprüche, **dadurch gekennzeichnet, dass** das Datenmodul (23) eine Auswerteeinheit zur Auswertung und/oder Aufbereitung der von dem mindestens einen Sensor (24) erfassten Daten umfasst.

7. Werkzeughalter (10, 50) nach einem der vorhergehenden Ansprüche, **dadurch gekennzeichnet, dass** das Datenmodul (23) eine Speichereinheit zum Speichern der von dem mindestens einen Sensor (24) erfassten Daten und/oder der von der Auswerteeinheit ausgewerteten oder erfassten Daten umfasst.

8. Werkzeughalter (10, 50) nach einem der vorhergehenden Ansprüche, **dadurch gekennzeichnet, dass** das Datenmodul (23) und die Stromversorgungseinheit (22) in dem Gehäuse (11) des Werkzeughalters (10) oder einem separaten Gehäuse (20) untergebracht sind.

9. Werkzeughalter (10, 50) nach Anspruch 8, **dadurch gekennzeichnet, dass** das Gehäuse (11) des Werkzeughalters (10) oder das separate Gehäuse (20) eine Abdeckung (21) aufweist.

10. Werkzeughalter (10, 50) nach Anspruch 9, **dadurch gekennzeichnet, dass** das separate Gehäuse (20) und/oder die Abdeckung (21) aus einem nicht-ferromagnetischen Material besteht.

11. Werkzeughalter (10, 50) nach einem der vorhergehenden Ansprüche, **dadurch gekennzeichnet, dass** die Stromversorgungseinheit (22) ein Akkumulator und/oder Ladungsspeicher (22A) ist.

12. Werkzeughalter (10, 50) nach Anspruch 11, **dadurch gekennzeichnet, dass** er einen Nanogenerator oder einen Generator umfasst, und dass der Nanogenerator oder der Generator zum Laden des Akkumulators und/oder Ladungsspeicher eingerichtet ist.

13. Werkzeughalter (10, 50) nach Anspruch 12, **dadurch gekennzeichnet, dass** der Nanogenerator oder der Generator das Datenmodul (23) während des Betriebs mindestens teilweise mit elektrischer Energie versorgt.

14. Werkzeughalter (10, 50) nach einem der Ansprüche 11 bis 13, **dadurch gekennzeichnet, dass** er eine Empfangsspule (29) und einen Gleichrichter (36) umfasst, und dass die Empfangsspule (29) zur Kopplung mit einer außerhalb des Werkzeughalters (10, 50) befindlichen Sendespule (35) zum induktiven Laden des Akkumulators und/oder Ladungsspeicher (22A) ausgebildet ist.

15. Werkzeughalter (50) nach einem der vorhergehenden Ansprüche, **dadurch gekennzeichnet, dass** er aus mehreren Modulen (51, 52, 53, ...) zusammengesetzt ist.

## Claims

1. Tool holder (10, 50) comprising a receptacle for a tool (15), and also a data module (23) and a power supply (22), wherein the data module (23) has at least one sensor (24) for capturing operating and/or status data, and a transmitter for transmitting the data to a receiver, wherein the tool holder (10, 50) has a switching unit (26) which electrically connects or disconnects the data module (23) to or from the power supply (22), and wherein the switching unit (26) is designed in such a manner that it is actuated without contact, and wherein the switching unit (26) is designed such that it is actuated contactlessly, wherein the switching unit (26) is a reed switch, **characterized in that** the reed switch is designed to be actuated by a magnet (19) located outside of the tool holder (10).

2. Tool holder (10, 50) according to claim 1, **characterized in that** the reed switch is designed as an opener or as a changeover contact.

3. Tool holder (10, 50), comprising a receptacle for a tool (15), as well as a data module (23) and a power supply (22), wherein the data module (23) comprises at least one sensor (24) for capturing operating and/or status data, and a transmitter for transmitting the data to a receiver, wherein the tool holder (10, 50) has a switching unit (26) which electrically connects or disconnects the data module (23) to or from the power supply (22), and wherein the switching unit (26) is designed such that it is actuated contactlessly, **characterized in that** the switching unit (26) comprises an electrically actuatable switch, and **in that** the switching unit (26) is supplied wirelessly with electrical energy by a transmitter (41) located outside of the tool holder (10, 50), for the purpose of switching the electrically actuatable switch.

4. Tool holder (10, 50) according to claim 3, **characterized in that** the switching unit (26) comprises a receiver (42) for receiving the electrical energy emitted by the transmitter (41), in particular by means of electromagnetic waves.

5. Tool holder (10, 50) according to any of the preceding claims, **characterized in that** the data module (23) has a rotation speed or angle of rotation sensor, at least one temperature sensor, an acceleration sensor, a microphone, and/or a sensor for capturing the charge status of the power supply (22).

6. Tool holder (10, 50) according to any of the preceding claims, **characterized in that** the data module (23) comprises an evaluation unit for evaluating and/or processing the data captured by the at least one sensor (24) .

7. Tool holder (10, 50) according to any of the preceding claims, **characterized in that** the data module (23) comprises a storage unit for storing the data captured by the at least one sensor (24) and/or the data evaluated or captured by the evaluation unit.

8. Tool holder (10, 50) according to any of the preceding claims, **characterized in that** the data module (23) and the power supply unit (22) are accommodated in the housing (11) of the tool holder (10) or in a separate housing (20).

9. Tool holder (10, 50) according to claim 8, **characterized in that** the housing (11) of the tool holder (10) or the separate housing (20) has a cover (21).

10. Tool holder (10, 50) according to claim 9, **characterized in that** the separate housing (20) and/or the cover (21) consists of a non-ferromagnetic material.

11. Tool holder (10, 50) according to any of the preceding claims, **characterized in that** the power supply unit (22) is an accumulator and/or charge storage device (22A).

12. Tool holder (10, 50) according to claim 11, **characterized in that** it comprises a nanogenerator or a generator, and **in that** the nanogenerator or the generator is configured to charge the accumulator and/or charge storage device.

13. Tool holder (10, 50) according to claim 12, **characterized in that** the nanogenerator or the generator at least partially supplies the data module (23) with electrical energy during operation.

14. Tool holder (10, 50) according to any of claims 11 to 13, **characterized in that** it comprises a receiving coil (29) and a rectifier (36), and **in that** the receiving coil (29) is designed for coupling to a transmitting coil (35) situated outside of the tool holder (10, 50) for the purpose of inductively charging the battery and/or charge storage device (22A).

15. Tool holder (50) according to any of the preceding claims, **characterized in that** it is composed of a plurality of modules (51, 52, 53,...).

## Revendications

1. Porte-outil (10, 50) comprenant un logement pour un outil (15) ainsi qu'un module de données (23) et une alimentation électrique (22), dans lequel le module de données (23) comprend au moins un capteur (24) pour l'acquisition de données de fonctionnement et/ou d'état, et un émetteur pour la transmission des données à un récepteur, dans lequel le porte-outil (10, 50) présente une unité de commutation (26), laquelle relie électriquement le module de données (23) à l'alimentation électrique (22) ou le sépare de celle-ci, et dans lequel l'unité de commutation (26) est réalisée de sorte qu'elle est actionnée sans contact, dans lequel l'unité de commutation (26) est un commutateur Reed, **caractérisé en ce que** le commutateur Reed est réalisé pour l'actionnement par un aimant (19) se trouvant à l'extérieur du porte-outil (10).

2. Porte-outil (10, 50) selon la revendication 1, **caractérisé en ce que** le commutateur Reed est réalisé sous la forme d'un contact de repos ou sous la forme d'un contact à deux directions.

3. Porte-outil (10, 50) comprenant un logement pour un outil (15) ainsi qu'un module de données (23) et une alimentation électrique (22), dans lequel le module de données (23) comprend au moins un capteur (24) pour l'acquisition de données de fonctionnement et/ou d'état, et un émetteur pour la transmission des données à un récepteur, dans lequel le porte-outil (10, 50) présente une unité de commutation (26), laquelle relie électriquement le module de données (23) à l'alimentation électrique (22) ou le sépare de celle-ci, et dans lequel l'unité de commutation (26) est réalisée de sorte qu'elle est actionnée sans contact, **caractérisé en ce que** l'unité de commutation (26) comprend un commutateur pouvant être actionné électriquement, et que l'unité de commutation (26) pour la commutation du commutateur pouvant être actionné électriquement est alimentée sans fil en énergie électrique par un émetteur (41) se trouvant à l'extérieur du porte-outil (10, 50).

4. Porte-outil (10, 50) selon la revendication 3, **caractérisé en ce que** l'unité de commutation (26) comprend un récepteur (42) pour la réception de l'énergie électrique émise par l'émetteur (41), en particulier au moyen d'ondes électromagnétiques.

5. Porte-outil (10, 50) selon l'une quelconque des revendications précédentes, **caractérisé en ce que** le module de données (23) contient un capteur de vitesse de rotation ou d'angle de rotation, au moins un capteur de température, un capteur d'accélération, un microphone et/ou un capteur pour l'acquisition de l'état de charge de l'alimentation électrique (22) .

6. Porte-outil (10, 50) selon l'une quelconque des revendications précédentes, **caractérisé en ce que** le module de données (23) comprend une unité d'évaluation pour l'évaluation et/ou le traitement des données acquises par le au moins un capteur (24).

7. Porte-outil (10, 50) selon l'une quelconque des revendications précédentes, **caractérisé en ce que** le module de données (23) comprend une unité de mise en mémoire pour la mise en mémoire des données acquises par le au moins un capteur (24) et/ou des données évaluées ou acquises par l'unité d'évaluation.

8. Porte-outil (10, 50) selon l'une quelconque des revendications précédentes, **caractérisé en ce que** le module de données (23) et l'unité d'alimentation électrique (22) sont logés dans le boîtier (11) du porte-outil (10) ou un boîtier (20) séparé.

9. Porte-outil (10, 50) selon la revendication 8, **caractérisé en ce que** le boîtier (11) du porte-outil (10) ou le boîtier (20) séparé présente un cache (21).

10. Porte-outil (10, 50) selon la revendication 9, **caractérisé en ce que** le boîtier (20) séparé et/ou le cache (21) est constitué d'un matériau non ferromagnétique.

11. Porte-outil (10, 50) selon l'une quelconque des revendications précédentes, **caractérisé en ce que** l'unité d'alimentation électrique (22) est un accumulateur et/ou dispositif de stockage de charge (22A).

12. Porte-outil (10, 50) selon la revendication 11, **caractérisé en ce qu'**il comprend un nanogénérateur ou un générateur, et que le nanogénérateur ou le générateur est conçu pour charger l'accumulateur et/ou le dispositif de stockage de charge.

13. Porte-outil (10, 50) selon la revendication 12, **caractérisé en ce que** le nanogénérateur ou le générateur alimente le module de données (23) au moins en partie en énergie électrique pendant le fonctionnement.

14. Porte-outil (10, 50) selon l'une quelconque des revendications 11 à 13, **caractérisé en ce qu'**il comprend une bobine de réception (29) et un redresseur (36), et que la bobine de réception (29) est réalisée pour le couplage à une bobine d'émission (35) se trouvant à l'extérieur du porte-outil (10, 50) pour la charge inductive de l'accumulateur et/ou du dispositif de stockage de charge (22A).

15. Porte-outil (50) selon l'une quelconque des revendications précédentes, **caractérisé en ce qu'**il est composé de plusieurs modules (51, 52, 53, ... ).
